# EUROPEAN PATENT APPLICATION

(11) **EP 2 811 136 A1**
(43) Date of publication of application: **10.12.2014**
(21) Application number: 13170518.8
(22) Date of filing: 04.06.2013
(51) Int. Cl.: F02B 21/00, F02D 41/00, F02D 41/10, F02D 23/00, F02M 23/00

(54) **Method for operating internal combustion engines**

(71) Applicant: Caterpillar Motoren GmbH & Co. KG, 24159 Kiel (DE)
(72) Inventor: Schulz, Frank, 24147 Kiel (DE); Deppe, Tobias, 24214 Gettorf (DE); Janzen, Jan, 24145 Kiel (DE)
(74) Representative: Kramer - Barske - Schmidtchen

(57) **Abstract**

An increase of power output of internal combustion engines (10) commonly needs to be performed rapidly. For quickly satisfying at least temporarily an increase of power output of internal combustion engines (10), the disclosed method for supporting an increase of the power output when operating an internal combustion engine (10) may comprise operating the internal combustion engine (10) by supplying an amount of charged air and fuel to the at least one cylinder (26) and combusting this mixture therein, monitoring at least one engine parameter, determining a temporal change of the at least one engine parameter and/or a mismatch of the at least one engine parameter with a predetermined engine parameter table, and supplying pressurized gaseous fluid in addition to the charged air to the at least one cylinder (26), when the determined temporal change and/or the determined mismatch exceed a predetermined respective threshold.

## Description

### Technical Field

The present disclosure generally relates to a method for operating internal combustion engines, and particularly to a method for operating internal combustion engines for at least temporarily increasing the power output of the internal combustion engines.

### Background

Internal combustion engines, such as, for instance, dual fuel internal combustion engines or internal combustion engines running on heavy fuel oil, diesel oil, or gaseous fuel oil, may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications. While operating the internal combustion engine, operating conditions may occur where the power demand may be increased, such that the power output of the internal combustion engine may be rapidly increased.

For increasing the power output of internal combustion engines, it is known to increase, for instance, the amount of injected fuel and the amount of supplied air to the combustion chambers. For increasing the amount of supplied air, for example, the turbocharger speed may be increased, which leads to higher pressures and, thus, to more charged air in the combustion chamber during the combustion event. However, the increase of the injected fuel amount and the increase of air supplied by the accelerated turbocharger may be not simultaneous, as the turbocharger speed may not be increased as fast as the increase of the injected fuel amount.

The present disclosure is directed, at least in part, to improving or overcoming one or more aspects of prior systems.

### Summary of the Disclosure

According to an aspect of the present disclosure, a method for increasing the power output of an internal combustion engine including at least one cylinder (more specifically for supporting an increase of the power output when operating an internal combustion engine including at least one cylinder), an intake manifold fluidly connected to the at least one cylinder, and an inlet valve fluidly interconnected between the intake manifold and the at least one cylinder for controlling the flow of (for example charged) air to the at least one cylinder may comprise operating the internal combustion engine by supplying an amount of (charged) air and an amount of fuel to the at least one cylinder and combusting the mixture of (charged) air and fuel within the at least one cylinder. The disclosed method may further comprise monitoring at least one engine parameter, determining a temporal change of the at least one engine parameter and/or a mismatch of the at least one engine parameter with a predetermined engine parameter table, and supplying pressurized gaseous fluid in addition to the charged air to the at least one cylinder, when the determined temporal change and/or the determined mismatch exceed a predetermined respective threshold.

According to another aspect of the present disclosure, an internal combustion engine may comprise at least one cylinder, an intake manifold fluidly connected to the at least one cylinder, an inlet valve fluidly interconnected between the intake manifold and the at least one cylinder for controlling the flow of (charged) air to the at least one cylinder, and a control unit configured to perform the method according to the present disclosure.

According to another aspect of the present disclosure, an internal combustion engine may comprise at least one cylinder, an intake manifold fluidly connected to the at least one cylinder, an inlet valve fluidly interconnected between the intake manifold and the at least one cylinder for providing (charged) air to the at least one cylinder, and a control valve for providing additionally pressurized gaseous fluid to the at least one cylinder.

The at least one engine parameter monitored by the control unit may include, for example, at least one of the amount of fuel, the amount of charged air, an engine speed, a turbocharger speed, an air-to-fuel ratio, and/or a fuel amount-to-turbocharger speed ratio.

Other features and aspects of this disclosure will be apparent from the following description and the accompanying drawings.

### Brief Description of the Drawings

Fig. 1 is a schematic view of a turbo-charged internal combustion engine having a gaseous fluid supply according to a first embodiment;
Fig. 2 is a schematic view of a turbo-charged internal combustion engine having a gaseous fluid supply according to a second embodiment; and
Fig. 3 is a schematic view of a turbo-charged internal combustion engine having a gaseous fluid supply according to a third embodiment.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that the power increase of an internal combustion engine may be supported by supplying pressurized gaseous fluid, such as, for instance, pressurized air in addition to charged air to the cylinders of the internal combustion engine. The supply of pressurized gaseous fluid may support in rapidly increasing the power output of the internal combustion engine. When, for example, at least one engine parameter is indicative of an increased power request, the supply of pressurized gaseous fluid may increase the power output until the turbocharger is accelerated, such that the charged air may be used for having the desired and requested power output. In such case, the supply of pressurized gaseous fluid may be terminated. Accordingly the required oxygen for the increase in output power by combusting an increased amount of fuel may be provided by the pressurized gaseous fluid such as air or a gas mixture comprising oxygen. The pressurized gaseous fluid may be provided, for example, during the compression and/or intake stroke.

The present disclosure may be further based at least in part on the realization that providing pressurized air additionally to the charged air to the combustion chamber may increase the air-to-fuel ratio which may lead to an efficient combustion with higher efficiency and, thus, to an increased power output of the internal combustion engine. In particular, supplying additional pressurized air to the cylinder may increase the acceleration performance of the internal combustion engine, which may lead to a quick power output increase of the internal combustion engine and/or an improved smoke behavior of the engine.

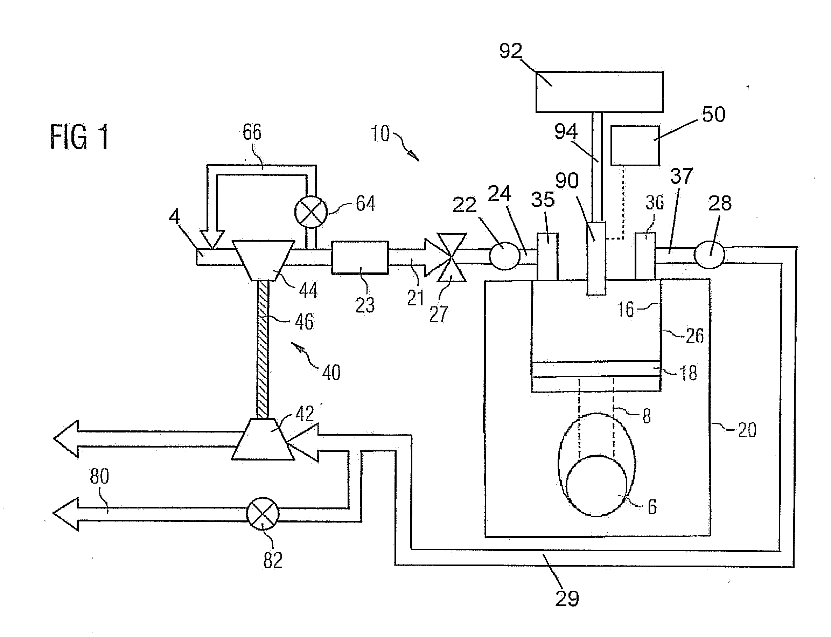

Referring to the drawings, an exemplary embodiment of an internal combustion engine 10 is illustrated in Fig. 1. The internal combustion engine 10 may include features not shown, such as fuel systems, air systems, cooling systems, peripheries, drive train components, for example. For the purposes of the present disclosure, the internal combustion engine 10 is an internal combustion engine running on heavy fuel oil (HFO). One skilled in the art will recognize, however, that the internal combustion engine 10 may be any type of internal combustion engine, for example, a gaseous fuel engine, a dual fuel engine operated on liquid and gaseous fuel types or any other Otto or diesel internal combustion engine that utilizes a mixture of fuel and air for combustion.

The internal combustion engine 10 may be of any size, with any number of cylinders and in any configuration ("V", "in-line", etc.). The internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, the internal combustion engine 10 comprises an engine block 20 including at least one cylinder 26, at least one fuel tank (not shown), a turbocharger 40 associated with the at least one cylinder 26, and an intake manifold 22. Although not explicitly shown in Fig. 1, the intake manifold 22 may be fluidly connected to each of the at least one cylinder 26 via a plurality of intake ducts 24.

The engine block 20 includes a crank-case (not shown) within which a crank-shaft 6 is supported. The crank-shaft 6 is connected to pistons 18 that are movable within each of the at least one cylinder 26 during operation of the internal combustion engine 10.

Each of the at least one cylinder 26 is provided with at least one inlet valve 35 that is adapted to open or close a fluid connection between the intake duct 24 and a corresponding combustion chamber 16 of the at least one cylinders 26.

An exhaust manifold 28 is connected to each of the at least one cylinder 26. Each of the at least one cylinder 26 is provided with at least one exhaust valve 36 disposed in an exhaust duct 37 and being configured to open and close a fluid connection between the combustion chamber 16 of each of the at least one cylinder 26 and the exhaust manifold 28.

Generally, when the internal combustion engine 10 is operated, a mixture of HFO and air (in the following referred to as "combustion mixture") is provided in the combustion chambers 16 of the at least one cylinder 26. Specifically, a fuel injection system (not explicitly shown in the drawings) is configured to inject an appropriate amount of HFO into the combustion chamber 16, and charged air is introduced into the combustion chambers 16 via the intake manifold 22. After combustion, exhaust gas generated by the combustion process are released from the at least one cylinder 26 through the exhaust ducts 37 into the exhaust manifold 28 and then into a main exhaust duct 29 connected to, for example, the turbocharger 40.

The turbocharger 40 is configured to use the heat and pressure of the exhaust gas of the internal combustion engine 10 to drive a compressor 44 for compressing intake air prior to being supplied to the engine. Specifically, exhaust gas passing a turbine 42 of the turbocharger 40 rotates the turbine 42, thereby decreasing in pressure and temperature. The compressor 44 is rotatably connected to the turbine 42 via a common shaft 46 and driven by the turbine 42.

Air is sucked in through a main air inlet 4 and is supplied to the compressor 44. It should be appreciated that, in other embodiments relating to gaseous fuel internal combustion engines, gaseous fuel and air may be mixed in a mixer prior to being supplied to the compressor 44. In yet other embodiments relating to gaseous fuel (dual fuel) internal combustion engines, for example, gas valves may be provided for each of the at least one cylinder 26 to inject the gaseous fuel into the air supplied to each cylinder, for example, upstream of the inlet valve 35. It is also contemplated that gaseous fuel may be directly injected into each cylinder using a suitable gaseous fuel injector.

Generally, an outlet of the compressor 44 is fluidly connected to an inlet of the intake manifold 22 via a compressor connection 21. As shown in Fig. 1, an outlet of the compressor 44 is connected to the inlet of intake manifold 22 via a cooler 23. A throttle valve 27 arranged downstream of the cooler 23 is configured to open or close the fluid connection between the compressor connection 21 and the intake manifold 22, thereby enabling or restricting a flow from the compressor connection 21 into the intake manifold 22.

During operation of the internal combustion engine 10, the intake air is compressed and cooled prior to being supplied to the at least one cylinder 26. Within the at least one cylinder 26, further compression and heating of the combustion mixture may be caused by movement of the pistons 18. Then, the combustion mixture within the at least one cylinder 26 may be ignited, either by using a spark plug (not shown) or due to the compression of the mixture within the combustion chamber 16. A pilot injection of fuel may be also used to initiate the combustion. The produced exhaust gas is discharged via the exhaust manifold 28.

An outlet of the exhaust manifold 28 is fluidly connected to an inlet of the turbine 42. An outlet of the turbine 42 may be fluidly connected to, for example, an exhaust gas treatment system (not shown).

In some embodiments, as indicated in Fig. 1, the internal combustion engine 10 may be provided with a waste gate system including a waste gate connection 80 and a waste gate valve 82. Additionally, the internal combustion engine 10 may include a blow-off system including a blow-off connection 66 and a blow-off valve 64. It should be appreciated that the blow-off connection 66 and the blow-off valve 64 may be provided with different configurations than the one shown in Fig. 1, if appropriate.

As further shown in Fig. 1, the internal combustion engine 10 comprises a control valve 90 being in direct fluid communication with the at least one cylinder 26, specifically with the combustion chamber 16. The control valve 90 is further fluidly connected to a gaseous fluid source 92 configured to store pressurized gaseous fluid via a fluid duct 94. In some embodiments, the gaseous fluid may be pressurized air.

The control valve 90 may also constitute a starter valve commonly used for supplying compressed air to the at least one cylinder 26 for starting operation of the internal combustion engine 10.

Although not shown in Fig. 1, each of the at least one cylinder 26 is provided with a control valve 90, whereas each of the control valves 90 is fluidly connected to the gaseous fluid source 92.

The gaseous fluid source 92 may be sized for storing pressurized fluid sufficient for starting the internal combustion engine 10 and for at least temporarily increasing the power output of the internal combustion engine 10, when a power demand exceeds a predetermined threshold, which may be described in greater detail below.

A control unit 50 is configured to determine the requested power demand. If the requested power demand of the internal combustion engine 10 exceeds a predetermined threshold, the control unit 50 communicates with each of the control valves 90 for operating the same. For example, in cases when the control valve 90 shall open the fluid communication between the gaseous fluid source 92 and the combustion chamber 26 such that pressurized gaseous fluid is enabled to flow into the at least one cylinder 26, the control unit 50 provides an electric signal to the control valve 90 indicative of opening the control valve 90.

The control unit 50 may be a single microprocessor or dual microprocessors that include means for controlling, among others, an operation of various components of the internal combustion engine 10. The control unit 50 may be a general engine control unit (ECU) capable of controlling numerous functions associated with the internal combustion engine 10 and/or its associated components. The control unit 50 may include all components required to run an application such as, for example, a memory, a secondary storage device, and a processor such as a central processing unit or any other means known in the art for controlling the internal combustion engine 10 and its components. Various other known circuits may be associated with the control unit 50, including power supply circuitry, signal conditioning circuitry, communication circuitry and other appropriate circuitry. The control unit 50 may analyze and compare received and stored data and, based on instructions and data stored in memory or input by a user, determine whether action is required. For example, the control unit 50 may compare received values with the target values stored in memory, and, based on the results of the comparison, transmit signals to one or more components to alter the operation status of the same.

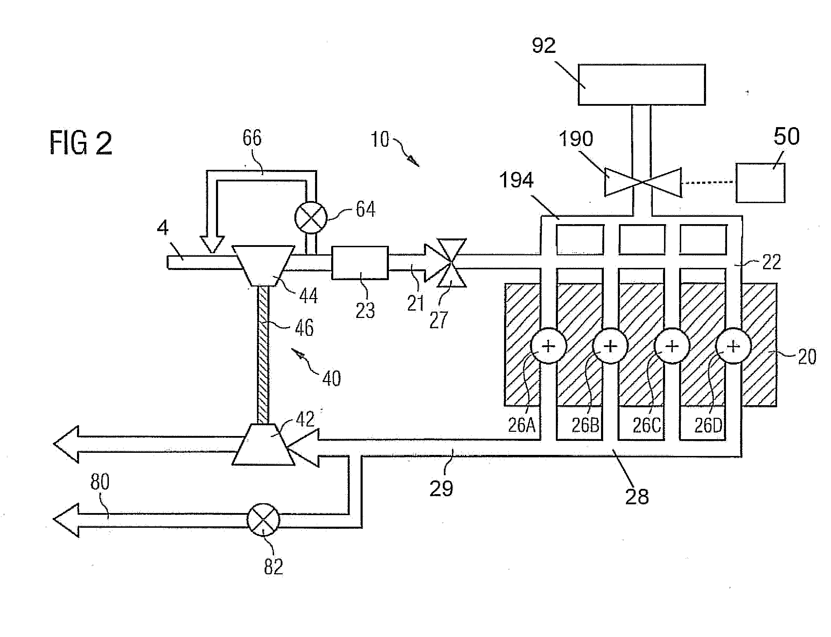

Referring to Fig. 2, another embodiment of an internal combustion engine 10 is illustrated in detail. The components of the internal combustion engine 10 of Fig. 2 which are identical to the components of the internal combustion engine 10 of Fig. 1 are provided with the same reference signs where appropriate.

As illustrated in Fig. 2, the internal combustion engine 10 comprises a bank of cylinders 26A-26D and a control valve 190 fluidly connected to the intake manifold 22 via a fluid duct 194. The fluid duct 194 is configured to fluidly connect to at least two positions of the intake manifold 22, such that the distribution of pressurized gaseous fluid along the bank of cylinder 26A-26D into the intake manifold 22 is enhanced. The control valve 190 is fluidly connected to the gaseous fluid source 92 and in communication with the control unit 50.

In some embodiments, multiple control valves 190 may be provided. In such case, one control valve 190 may be provided for each connection of the fluid duct 194 with the intake manifold 22. For example, in case of the internal combustion engine 10 of Fig. 2, four control valves 190 may be provided at each of the four connections of the fluid duct 194 and the intake manifold 22.

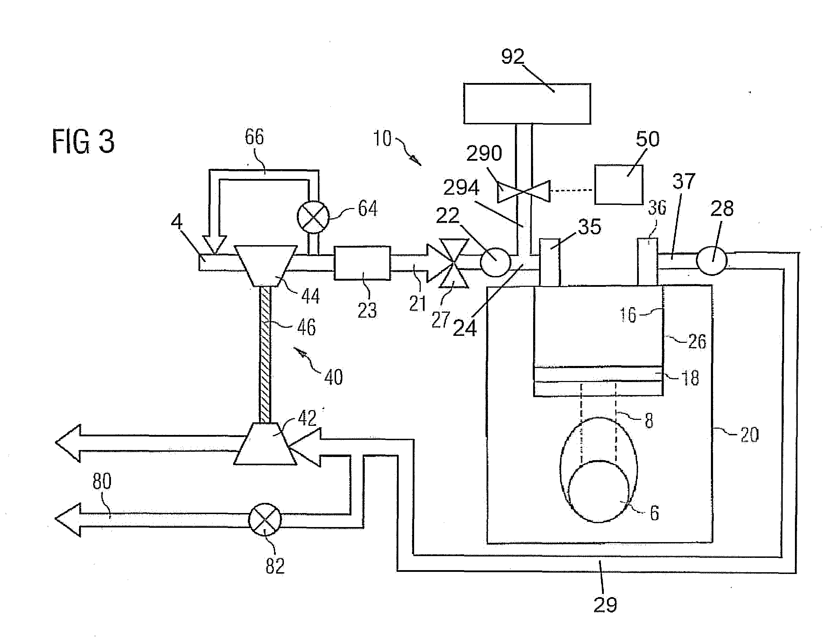

With respect to Fig. 3, another embodiment of an internal combustion engine 10 is illustrated in detail. The components of the internal combustion engine 10 of Fig. 3 which are identical to the components of the internal combustion engine 10 of Fig. 1 are provided with the same reference signs where appropriate.

The internal combustion engine 10 of Fig. 3 includes a control valve 290 fluidly connected to each of the intake ducts 24 via a fluid duct 294. The control valve 290 is fluidly connected to the gaseous fluid source 92 and in communication with the control unit 50.

In some embodiments, multiple control valves 290 may be provided. In such case, each of the control valves 290 may be provided at each of the intake ducts 24. For example, in case of an internal combustion engine 10 including four cylinders 26, four control valves 290 may be provided at each of the four fluid ducts 194.

Although not explicitly shown in any one of Figs. 1 to 3, the disclosed internal combustion engine 10 may be used in a generator set assembly for generating electrical power. An electrical load, such as, for example, an electrical power grid may be connected to the electrical output of the generator set assembly. In some situations, during normal operation of the internal combustion engine 10, the power demand of the electrical load may exceed the power output of the internal combustion engine 10. For satisfying the power demand, additional pressurized fluid, such as, for instance, pressurized air is supplied to the at least one cylinder 26 for at least temporarily increasing the air-to-fuel ratio of the combustion mixture and, thus, for increasing the power output of the internal combustion engine 10.

In some other embodiments, increased power demands may originate from, for instance, a demand for accelerating a ship, which requires a faster rotation of the ship propeller. In yet some embodiments, the power demand may originate from any demands requiring a quick acceleration of the internal combustion engine 10, which may lead to higher rotational speeds of the internal combustion engine 10.

In case of receiving an increased power demand, increasing the air-to-fuel ratio by increasing the power output of the compressor 44 of the turbocharger 40 may be too slow for rapidly satisfying the power demand, specifically providing sufficient amounts of oxygen to the engine. Therefore, by supplying additional pressurized fluid to the cylinders 26 may rapidly increase the power output of the internal combustion engine 10 for at least temporarily satisfying the increased power demands until the turbocharger 40 has reached a desired speed and the charged air compressed by the compressor 44 may comply with the requested power output of the engine. Then, the supply of pressurized gaseous fluid may be terminated.

### Industrial Applicability

In the following, operation of the internal combustion engine 10 is described in greater detail with reference to Figs. 1 to 3. For instance, the internal combustion engine 10 is considered to be used in a generator set assembly. However, the present disclosure is not limited to this specific use. In some embodiments, the internal combustion engine 10 may also be utilized in connection with any other machines or devices which demand power.

During normal operation of the internal combustion engine 10, a mixture of charged air and fuel is combusted within the combustion chambers 16 of the at least one cylinder 26. The mixture of charged air and fuel is selected according to a desired air-to-fuel ratio that corresponds to a desired power output of the internal combustion engine. The produced exhaust gas may be released out of the combustion chambers 16 via the exhaust valves 36 and may then flow into the exhaust duct 37 via the exhaust manifold 28. Subsequently, the exhaust gas may drive the turbine 42 of the turbocharger 40, which in turn may drive the compressor 44 mechanically connected to the turbine 42 via the common shaft 46. The compressor 44 sucks in air and charges the air to predetermined pressure, for example, about 2 to 8 bar. The charged air is provided to the intake manifold 22 via the throttle valve 27. The charged air is then distributed into each of the cylinders 26 via the intake ducts 24.

The control unit 50 controls opening and closing operations of the inlet valves 35 of each of the cylinders 26 for providing a combustion mixture having a predetermined air-to-fuel ratio to the combustion chamber 16. For example, a fuel injector (not shown) injects a predetermined amount of fuel, for instance HFO into the combustion chamber 16. The fuel injector may also be controlled by the control unit 50.

The control unit 50 further monitors at least one engine parameter, such as, for example, a charged air amount, an engine speed, a turbocharger speed, an air-to-fuel ratio, a fuel amount-to-turbocharger speed ratio and/or an injected fuel amount. Then, the control unit 50 determines a temporal change of the at least one engine parameter and/or a mismatch of the at least one engine parameter with a predetermined engine parameter table stored in, for instance, a memory incorporated with the control unit 50. The temporal change of the at least one engine parameter may indicate a change of, for instance, an increase of the power demand, such as, for example, an increase of a desired electrical load connected to the generator set assembly. Depending on the temporal change of the at least one engine parameter, the control unit 50 may increase the injected fuel amount and, at the same time, may commence or increase the supply of pressurized gaseous fluid for having a desired air-to-fuel ratio.

In some conditions, the turbocharger 40 may be too slow for quickly providing the desired amount of charged air having a desired pressure for providing a desired air-to-fuel ratio. Therefore, for providing the desired air-to-fuel ratio, additional pressurized gaseous fluid may be supplied to the cylinder 26 until the turbocharger 40 has reached an appropriate turbocharger speed which supplies charged air with the desired pressure.

For example, when the power output of the internal combustion engine 10 shall be increased from about, for example, 20 % engine load to about 40 % engine load, the internal combustion engine 10 should be accelerated or have an increased combustion process. To satisfy that power output demand, the control unit 50 may further control supply of pressurized fluid into the combustion chambers 16 for rapidly increasing the air-to-fuel ratio and, thus, increasing the power output of the internal combustion engine 10. Once the turbocharger speed has reached a desired speed, the control unit 50 terminates supply of the additional pressurized gaseous fluid, as the compressor 44 is accelerated for providing charged air having the desired pressure. The additionally supplied pressurized fluid may include a pressure ranging from about 1 bar to about 30 bar, depending on the position in the charge air system/cylinder, where the pressurized fluid is supplied and/or in which section of the combustion cycle the pressurized fluid is supplied.

For instance, referring to Fig. 1, the control unit 50 may provide a signal to the control valve 90 to open the fluid connection between the gaseous fluid source 92 and the at least one cylinder 26, such that a predetermined amount of additional pressurized fluid, for example, pressurized air is supplied to the at least one cylinder 26. In such case, the control unit 50 may first control the supply of charged air into the at least one cylinder 26 via the inlet valve 35 during the intake stroke. Then, after the inlet valve 35 is closed, the control unit 50 may control the supply of pressurized fluid to the at least one cylinder 26 via the control valve 90, for example, during the intake and/or compression stroke. This may prevent a flow of the pressurized fluid through the opened inlet valve 35 into the intake manifold 22.

In some embodiments, charged air and pressurised fluid may be introduced into the combustion chamber simultaneously, and the inlet valve may be associated with non-return valve means to restrict the flow of pressurised fluid through the inlet manifold.

In some embodiments, the control unit 50 may control the turbocharger 40 for increasing the turbocharger speed simultaneously to the supply of the pressurized fluid, for example, by modifying the turbocharger geometry, mechanically excellarating the turbocharge by a motor, or by modifying the provided exhaust stream via a waste gate. When the control unit 50 detects that the turbocharger speed fits, for example, to the injected fuel amount, the control unit 50 may stop the supply of the pressurized gaseous fluid.

In some embodiments, with respect to Figs. 2 and 3, pressurized fluid may be supplied to the at least one cylinder 26 via the intake manifold 22 and the intake duct 24. In such case, the pressurized fluid is additionally supplied to the at least one cylinder 26 together with the charged air via the inlet valve 35.

While the drawings illustrate engine systems that include a turbocharger system (single-stage or multi-stage systems), in some embodiments, the herein disclosed concepts may also be applied to naturally aspirated engines.

Although the preferred embodiments of this invention have been described herein, improvements and modifications may be incorporated without departing from the scope of the following claims.

## Claims

1. A method for supporting an increase of the power output when operating an internal combustion engine (10) including at least one cylinder (26), an intake manifold (22) fluidly connected to the at least one cylinder (26), and an inlet valve (35) fluidly interconnected between the intake manifold (22) and the at least one cylinder (26) for controlling the flow of air to the at least one cylinder (26), the method comprising:
operating the internal combustion engine (10) by supplying an amount of air and an amount of fuel to the at least one cylinder (26) and combusting the mixture of air and fuel within the at least one cylinder (26);
monitoring at least one engine parameter;
determining a temporal change of the at least one engine parameter and/or a mismatch of the at least one engine parameter with a predetermined engine parameter table; and
supplying pressurized gaseous fluid in addition to the amount of air to the at least one cylinder (26), when the determined temporal change and/or the determined mismatch exceed a predetermined respective threshold.

2. The method of claim 1, wherein the at least one engine parameter includes at least one of the amount of fuel, the amount of air, an engine speed, a turbocharger speed, an air-to-fuel ratio, and a fuel amount-to-turbocharger speed ratio.

3. The method of any one of the preceding claims, further comprising:
increasing the turbocharger speed;
detecting that the turbocharger speed corresponds to the injected amount of fuel; and
stopping the supply of the pressurized gaseous fluid.

4. The method of any one of the preceding claims, wherein the pressurized gaseous fluid is directly supplied to the at least one cylinder (26).

5. The method of claim 4, wherein the pressurized gaseous fluid is directly supplied to the at least one cylinder (26) via a starter valve of the internal combustion engine (10).

6. The method of any one of claims 1 to 3, wherein the pressurized gaseous fluid is supplied to the at least one cylinder (26) via at least two positions of the intake manifold (22).

7. The method of any one of claims 1 to 3, wherein the pressurized gaseous fluid is supplied to an intake duct (24) fluidly connecting the intake manifold (22) to the at least one cylinder (26).

8. The method of any one of the preceding claims, wherein the pressurized gaseous fluid is supplied to the at least one cylinder (26) during the intake stroke and/or compression stroke of the internal combustion engine (10).

9. The method of claim 8, wherein the pressurized gaseous fluid is supplied to the at least one cylinder (26) after the amount of charged air is supplied into the at least one cylinder (26).

10. The method of any one of the preceding claims, wherein the pressurized gaseous fluid is pressurized air.

11. The method of any one of the preceding claims, wherein the pressurized gaseous fluid has a pressure ranging from about 1 bar to about 30 bar.

12. An internal combustion engine (10) comprising:
at least one cylinder (26);
an intake manifold (22) fluidly connected to the at least one cylinder (26);
an inlet valve (35) fluidly interconnected between the intake manifold (22) and the at least one cylinder (26) for controlling the flow of air to the at least one cylinder (26); and
a control unit (50) configured to perform the method of any one of the preceding claims.

13. The internal combustion engine (10) of claim 12, further comprising a control valve (90; 190; 290) for providing the pressurized gaseous fluid.

14. The internal combustion engine (10) of claim 13, further comprising a gaseous fluid source (92) fluidly connected to the control valve (90; 190; 290) and configured to store pressurized gaseous fluid.

15. The internal combustion engine (10) of any one of claims 12 to 14, wherein the internal combustion engine (10) is part of a generator set assembly.
